# EUROPEAN PATENT APPLICATION

(11) **EP 4 753 010 A1**
(43) Date of publication of application: **03.06.2026**
(21) Application number: 24854423.1
(22) Date of filing: 09.08.2024
(51) Int. Cl.: H01M 10/42, G01M 3/16, H01M 50/103, H01M 10/48, H01M 50/209

(54) **BATTERY CELL CAPABLE OF DETECTING LEAKAGE OF ELECTROLYTE AND BATTERY MODULE INCLUDING SAME**

(30) Priority: 16.08.2023 KR 20230107189
(71) Applicant: LG Energy Solution, Ltd., Seoul 07335 (KR)
(72) Inventor: UHM, Jae Yong, Daejeon 34122 (KR); KIM, Minsung, Daejeon 34122 (KR)
(74) Representative: Goddar, Heinz J.
(86) International application number: PCT/KR2024/011932
(87) International publication number: WO 2025/037872

(57) **Abstract**

The present invention provides a battery cell capable of detecting electrolyte leakage, including: an electrode assembly; an electrolyte; a case 100 accommodating the electrode assembly and injected with the electrolyte, the case 100 comprising a first portion P1 and a second portion P2 spaced apart from each other by a predetermined distance; and a leakage sensor 200 coupled to and installed at the case 100, the leakage sensor 200 detecting the electrolyte leaking to the outside through the first portion P1 and the second portion P2. The leakage sensor 200 may include a conductor 220 surrounding the first portion P1 and the second portion P2 and constituting an electric circuit. At least one of a resistance, a current or a voltage of the electric circuit may change when the leaked electrolyte contacts with the conductor 220. The conductor 220 may include a first conductor 222 surrounding the first portion P1, a second conductor 224 surrounding the second portion P2, and a third conductor 226 connecting the first conductor 222 and the second conductor 224, the first conductor 222, the second conductor 224, and the third conductor 226 constituting the electric circuit.

## Description

### [TECHNICAL FIELD]

This application claims the benefit of priority based on Korean Patent Application No. 10-2023-0107189 filed on August 16, 2023, entire content disclosed in the document of the patent applications is included as a part of this specification.

The present invention relates to a battery cell capable of detecting electrolyte leakage and a battery module including the same, which can easily detect electrolyte leakage in two parts of a battery cell at low cost with a simple configuration and quickly and accurately detect electrolyte leakage in real time to prevent accidents such as fire in advance, and a battery module including the same.

### [BACKGROUND ART]

Secondary batteries are classified, depending on the structure of the electrode assembly in which the anode, cathode and separator are stacked, into jelly-roll type (winding type) electrode assemblies, stack type (laminated type) electrode assemblies, and stack/folding type electrode assemblies.

In addition, secondary batteries are classified, depending on the shape of the battery case, into cylindrical batteries and prismatic batteries in which the electrode assembly is accommodated in a cylindrical or prismatic metal can, and pouch-type batteries in which the electrode assembly is accommodated in a pouch-type case of an aluminum laminate sheet.

Since the jelly-roll type electrode assembly is easy to manufacture and has the advantages of excellent energy density per weight, and is easy to house in a cylindrical or prismatic case, the cylindrical batteries and prismatic batteries are widely used.

In the prismatic battery, the upper surface of the prismatic case may be provided with a liquid injection hole through which electrolyte is injected, a stopper that seals the liquid injection hole after electrolyte is injected, and a safety vent that opens by the internal pressure of the case.

The electrolyte may leak through the liquid injection hole and safety vent of the prismatic battery. When the electrolyte leaks, problems such as poor insulation may occur, which may cause fire. In addition, when the electrolyte leaks in a prismatic battery for a vehicle, a serious error may occur in the vehicle control system due to a voltage drop.

Therefore, a prismatic battery cell capable of detecting electrolyte leakage in real time and preventing accidents such as fire is necessary.

### [PRIOR ART LITERATURE]

### [PATENT DOCUMENT]

(Patent Document 0001) Korean Patent No. 10-1872471

### [DISCLOSURE]

### [TECHNICAL PROBLEM]

In order to solve above-described problems, it is an object of the present invention to provide a battery cell capable of detecting electrolyte leakage that may easily detect electrolyte leakage in two portions thereof at low cost with a simple configuration.

It is an object of the present invention to provide a battery cell capable of detecting electrolyte leakage and a battery module capable of detecting electrolyte leakage in real time.

It is an object of the present invention to provide a battery cell capable of detecting electrolyte leakage and a battery module capable of quickly, accurately, reliably and effectively detecting electrolyte leakage and preventing accidents such as fire in advance.

It is an object of the present invention to provide a battery cell capable of detecting electrolyte leakage with improved performance or sensitivity.

It is an object of the present invention to provide a battery cell capable of detecting electrolyte leakage that is easy to manufacture and maintain.

It is an object of the present invention to provide a battery module capable of operating a leakage sensor at low cost with a simple configuration and detecting electrolyte leakage in real time.

It is an object of the present invention to provide a battery module capable of preventing accidents such as explosion and fire.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a battery cell capable of detecting electrolyte leakage, including an electrode assembly, an electrolyte, a case 100, and a leakage sensor 200.

The case 100 may accommodate the electrode assembly and be injected with the electrolyte.

The case 100 may include a first portion P1 and a second portion P2 spaced apart from each other by a predetermined distance.

The leakage sensor 200 may be coupled to and installed at the case 100.

The leakage sensor 200 may detect electrolyte leaking to the outside through the first portion P1 and the second portion P2.

The leakage sensor 200 may surround the first portion P1 and the second portion P2.

The leakage sensor 200 may include a conductor 220 and constituting an electric circuit.

At least one of a resistance, a current or a voltage of the electric circuit may change when the leaked electrolyte contacts with the conductor 220.

The conductor 220 may include a first conductor 222, a second conductor 224, and a third conductor 226.

The first conductor 222 may surround the first portion P1.

The second conductor 224 may surround the second portion P2.

The third conductor 226 may connect the first conductor 222 and the second conductor 224.

The first conductor 222, the second conductor 224 and the third conductor 226 may constitute the electric circuit.

In one embodiment, the first portion P1 may be a liquid injection port 110 for injecting electrolyte sealed after injecting the electrolyte, or the second portion P2 may be a vent 120 opened by internal pressure.

In one embodiment, the first portion P1 or the second portion P2 may include an entire area of the case 100 where a predetermined hole is provided or where a predetermined hole is to be provided.

Here, the first conductor 222 or the second conductor 224 may surround the predetermined hole.

In one embodiment, the leakage sensor 200 may further include a circuit board 210.

The circuit board 210 may be coupled to the case 100.

The conductor 220 may be provided in the circuit board 210.

The circuit board 210 may include a first hole H1 and a second hole H2.

The first hole H1 may correspond to the first portion P1.

The second hole H2 may correspond to the second portion P2.

The first conductor 222 may surround the first hole H1.

The second conductor 224 may surround the second hole H2.

In one embodiment, the third conductor 226 may be provided between the first conductor 222 and the second conductor 224.

In one embodiment, the first conductor 222 may include a first wrapping portion WC1 and a second wrapping portion WC2.

The first wrapping portion WC1 may surround the first portion P1.

The second wrapping portion WC2 may surround the first wrapping portion WC1 with a predetermined distance therebetween.

The second conductor 224 may include: a fifth wrapping portion WC5 and a sixth wrapping portion WC6.

The fifth wrapping portion WC5 may surround the second portion P2.

The sixth wrapping portion WC6 may surround the fifth wrapping portion WC5 with a predetermined distance therebetween, or the sixth wrapping portion WC6 may be surrounded by the fifth wrapping portion WC5 with a predetermined distance therebetween to surround the second portion P2.

The third conductor 226 may include a first connecting portion CC1 and a second connecting portion CC2.

The first connecting portion CC1 may connect the first wrapping portion WC1 and the fifth wrapping portion WC5.

The second connecting portion CC2 may connect the second wrapping portion WC2 and the sixth wrapping portion WC6, wherein the second connecting portion CC2 may be spaced apart from the first connecting portion CC1 by a predetermined distance.

The first wrapping portion WC1, the second wrapping portion WC2, the fifth wrapping portion WC5, the sixth wrapping portion WC6, the first connecting portion CC1 and the second connecting portion CC2 may constitute the electric circuit.

At least one of the resistance, the current or the voltage may change when the leaking electrolyte is simultaneously in contact with the first wrapping portion WC1 and the second wrapping portion WC2, simultaneously in contact with the fifth wrapping portion WC5 and the sixth wrapping portion WC6, or simultaneously in contact with the first connecting portion CC1 and the second connecting portion CC2 such that the first wrapping portion WC1 and the second wrapping portion WC2 are electrically connected by the leaked electrolyte, the fifth wrapping portion WC5 and the sixth wrapping portion WC6 are electrically connected by the leaked electrolyte, or the first connecting portion CC1 and the second connecting portion CC2 are electrically connected by the leaked electrolyte.

In one embodiment, the first conductor 222 may include a third wrapping portion WC3.

The third wrapping portion WC3 may surround the second wrapping portion WC2 with a predetermined distance therebetween.

The second conductor 224 may include a seventh wrapping portion WC7.

The seventh wrapping portion WC7 may surround the sixth wrapping portion WC6 with a predetermined distance therebetween or a seventh wrapping portion WC7 may be surrounded by the sixth wrapping portion WC6 with a predetermined distance therebetween to surround the second portion P2.

The third conductor 226 may include a third connecting portion CC3.

The third connecting portion CC3 may connect the third wrapping portion WC3 and the seventh wrapping portion WC7, wherein the third connecting portion CC3 is spaced apart from the second connecting portion CC2 by a predetermined distance.

The third wrapping portion WC3, the seventh wrapping portion WC7 and the third connecting portion CC3 may constitute the electric circuit.

At least one of the resistance, the current or the voltage of the electric circuit may change when the leaked electrolyte is simultaneously in contact with the first wrapping portion WC1 and the second wrapping portion WC2, simultaneously in contact with the second wrapping portion WC2 and the third wrapping portion WC3, simultaneously in contact with the fifth wrapping portion WC5 and the sixth wrapping portion WC6, simultaneously in contact with the sixth wrapping portion WC6 and the seventh wrapping portion WC7, simultaneously in contact with the first connecting portion CC1 and the second connecting portion CC2, or simultaneously in contact with the second connecting portion CC2 and the third connecting portion CC3 such that the first wrapping portion WC1 and the second wrapping portion WC2 are electrically connected by the leaked electrolyte, the second wrapping portion WC2 and the third wrapping portion WC3 are electrically connected by the leaked electrolyte, the fifth wrapping portion WC5 and the sixth wrapping portion WC6 are electrically connected by the leaked electrolyte, the sixth wrapping portion WC6 and the seventh wrapping portion WC7 are electrically connected by the leaked electrolyte, the first connecting portion CC1 and the second connecting portion CC2 are electrically connected by the leaked electrolyte, or the second connecting portion CC2 and the third connecting portion CC3 are electrically connected by the leaked electrolyte.

In one embodiment, the first wrapping portion WC1, the fifth wrapping portion WC5, the first connecting portion CC1, the third wrapping portion WC3, the seventh wrapping portion WC7 and the third connecting portion CC3 may be connected to one another.

In one embodiment, the first conductor 222 may include a fourth wrapping portion WC4.

The fourth wrapping portion WC4 may surround the third wrapping portion WC3 with a predetermined distance therebetween.

The second conductor 224 may include an eighth wrapping portion WC8.

The eighth wrapping portion WC8 may surround the seventh wrapping portion WC7 with a predetermined distance therebetween or an eighth wrapping portion WC8 may be surrounded by the seventh wrapping portion WC7 with a predetermined distance therebetween to surround the second portion P2.

The third conductor 226 may include a fourth connecting portion CC4.

The fourth connecting portion CC4 may connect the fourth wrapping portion WC4 and the eighth wrapping portion WC8, wherein the fourth connecting portion CC4 is spaced apart from the third connecting portion CC3 by a predetermined distance.

The fourth wrapping portion WC4, the eighth wrapping portion WC8 and the fourth connecting portion CC4 may constitute the electric circuit.

At least one of the resistance, the current or the voltage of the electric circuit may change when the leaked electrolyte is simultaneously in contact with the first wrapping portion WC1 and the second wrapping portion WC2, simultaneously in contact with the second wrapping portion WC2 and the third wrapping portion WC3, simultaneously in contact with the third wrapping portion WC3 and the fourth wrapping portion WC4, simultaneously in contact with the fifth wrapping portion WC5 and the sixth wrapping portion WC6, simultaneously in contact with the sixth wrapping portion WC6 and the seventh wrapping portion WC7, simultaneously in contact with the seventh wrapping portion WC7 and the eighth wrapping portion WC8, simultaneously in contact with the first connecting portion CC1 and the second connecting portion CC2, simultaneously in contact with the second connecting portion CC2 and the third connecting portion CC3, or simultaneously in contact with the third connecting portion CC3 and the fourth connecting portion CC4 such that the first wrapping portion WC1 and the second wrapping portion WC2 are electrically connected by the leaked electrolyte, the second wrapping portion WC2 and the third wrapping portion WC3 are electrically connected by the leaked electrolyte, the third wrapping portion WC3 and the fourth wrapping portion WC4 are electrically connected by the leaked electrolyte, the fifth wrapping portion WC5 and the sixth wrapping portion WC6 are electrically connected by the leaked electrolyte, the sixth wrapping portion WC6 and the seventh wrapping portion WC7 are electrically connected by the leaked electrolyte, the seventh wrapping portion WC7 and the eighth wrapping portion WC8 are electrically connected by the leaked electrolyte, the first connecting portionCC1 and the second connecting portionCC2 are electrically connected by the leaked electrolyte, the second connecting portionCC2 and the third connecting portionCC3 are electrically connected by the leaked electrolyte, or the third connecting portionCC3 and the fourth connecting portionCC4 are electrically connected by the leaked electrolyte.

In one embodiment, the first wrapping portion WC1, the fifth wrapping portion WC5, the first connecting portion CC1, the third wrapping portion WC3, the seventh wrapping portion WC7 and the third connecting portion CC3 may be connected to one another.

The second wrapping portion WC2, the sixth wrapping portion WC6, the second connecting portion CC2, the fourth wrapping portion WC4, the eighth wrapping portion WC8 and the fourth connecting portion CC4 may be connected to one another.

In addition, in order to solve the above-described problems, the present invention provides a battery cell capable of detecting electrolyte leakage, including an electrode assembly, an electrolyte, a case 100, and a leakage sensor 200.

The case 100 may accommodate the electrode assembly and be injected with the electrolyte.

The case 100 may include a first portion P1.

The leakage sensor 200 may be coupled to and installed at the case 100.

The leakage sensor 200 may detect electrolyte leaking to the outside through the first portion P1.

The leakage sensor 200 may include a conductor 220.

The conductor 220 may surround the first portion P1.

The conductor 220 may constitute an electric circuit.

At least one of a resistance, a current or a voltage of the electric circuit may change when the leaked electrolyte contacts with the conductor 220.

The conductor 220 may include a first wrapping portion, a second wrapping portion WC2 and a third wrapping portion WC3.

The first wrapping portion WC1 may surround the first portion P1.

The second wrapping portion WC2 may surround the first wrapping portion WC1 with a predetermined distance therebetween.

The third wrapping portion WC3 may surround the second wrapping portion WC2 with a predetermined distance therebetween.

The first wrapping portion WC1, the second wrapping portion WC2 and the third wrapping portion WC3 may constitute the electric circuit.

At least one of the resistance, the current or the voltage of the electric circuit changes when the leaked electrolyte is simultaneously in contact with the first wrapping portion WC1 and the second wrapping portion WC2, or simultaneously in contact with the second wrapping portion WC2 and the third wrapping portion WC3 such that the first wrapping portion WC1 and the second wrapping portion WC2 are electrically connected by the leaked electrolyte, or the second wrapping portion WC2 and the third wrapping portion WC3 are electrically connected by the leaked electrolyte.

In one embodiment, the first portion P1 may include an entire area of the case 100 where a predetermined hole is provided or where a predetermined hole is to be provided.

Here, the conductor 220 may surround the predetermined hole.

In one embodiment, the first wrapping portion WC1 and the third wrapping portion WC3 may be connected to each other.

In one embodiment, the conductor 220 may further include a fourth wrapping portion WC4.

The fourth wrapping portion WC4 may surround the third wrapping portion WC3 with a predetermined distance therebetween.

The fourth wrapping portion WC4 may constitute the electric circuit.

At least one of the resistance, the current or the voltage of the electric circuit may change when the leaking electrolyte is simultaneously in contact with the first wrapping portion WC1 and the second wrapping portion WC2, simultaneously in contact with the second wrapping portion WC2 and the third wrapping portion WC3, or simultaneously in contact with the third wrapping portion WC3 and the fourth wrapping portion WC4 such that the first wrapping portion WC1 and the second wrapping portion WC2 are electrically connected by the leaking electrolyte, the second wrapping portion WC2 and the third wrapping portion WC3 are electrically connected by the leaking electrolyte, or the third wrapping portion WC3 and the fourth wrapping portion WC4 are electrically connected by the leaking electrolyte.

In one embodiment, the first wrapping portion WC1 and the third wrapping portion WC3 may be connected to each other.

The second wrapping portion WC2 and the fourth wrapping portion WC4 may be connected to each other.

In addition, in order to solve above-described problems, the present invention provides a battery module including a plurality of battery cells.

The battery cell may further include a housing 20 and an ICB (Inter Connected Board) 30.

The housing 20 may accommodate the plurality of battery cells.

The ICB (Inter Connected Board) 30 may be coupled to the housing 20 or the plurality of battery cells.

The ICB 30 may be connected to a conductor 220 of a leakage sensor 200 of each of the plurality of battery cells to apply a current to an electric circuit.

The ICB 30 may measure or detect at least one of a resistance, a current or a voltage of the electric circuit.

### [ADVANTAGEOUS EFFECTS]

According to the embodiments of the present invention, battery cell 10 capable of detecting electrolyte leakage includes an electrode assembly; an electrolyte; a case 100 accommodating the electrode assembly and injected with the electrolyte, the case 100 including a first portion P1 and a second portion P2 spaced apart from each other by a predetermined distance; and a leakage sensor 200 coupled to and installed at the case 100, the leakage sensor 200 detecting electrolyte leaking to the outside through the first portion P1 and the second portion P2. The leakage sensor 200 may include a conductor 220 surrounding the first portion P1 and the second portion P2 and constituting an electric circuit. At least one of a resistance, a current or a voltage of the electric circuit may change when the leaked electrolyte contacts with the conductor 220. The conductor 220 may include a first conductor 222 surrounding the first portion P1, a second conductor 224 surrounding the second portion P2, and a third conductor 226 connecting the first conductor 222 and the second conductor 224. The first conductor 222, the second conductor 224, and the third conductor 226 may constitute the electric circuit.

Accordingly, a battery cell 10 capable of detecting electrolyte leakage in two portions P1 and P2 thereof may be easily implemented at low cost with a simple configuration. In addition, electrolyte leakage in the two portions of a battery cell 10 may be detected in real time.

In addition, since the conductor 220 of the leakage sensor 200 surrounds the first portion P1 and the second portion P2, the leakage sensor 200 may quickly, accurately, reliably and effectively detect electrolyte leakage in case that the electrolyte mainly leaks through the first portion P1 and the second portion P2. As a result, accidents such as fire may be prevented in advance.

In addition, since the third conductor 226 connects the first conductor 222 and the second conductor 224 and constitutes an electric circuit similar to the first conductor 222 and the second conductor 224, the leakage sensor 200 may be easily implemented at low cost with a simple configuration. For example, as long as any one of the first conductor 222, the second conductor 224 and the third conductor 226 is connected to the anode of an external power supply and any one of the first conductor 222, the second conductor 224, and the third conductor 226 is connected to the cathode of the same external power supply, the leakage sensor 200 may detect any electrolytes leaked through the first portion P1 and the second portion P2. That is, it is not necessary to individually connect the first conductor 222 and the second conductor 224 to an external power supply.

In addition, since it is possible to detect not only the electrolyte in contact with the first conductor 222 or the second conductor 224 but also the electrolyte in contact with the third conductor 226, the performance of the leakage sensor 200 may be improved.

According to the embodiments of the present invention, the first portion P1 may be a liquid injection port 110 for injecting electrolyte sealed after injecting the electrolyte, or the second portion P2 may be a vent 120 opened by internal pressure.

Accordingly, since the conductor 220 of the leakage sensor 200 surrounds the liquid injection port 110 and/or the vent 120 where the electrolyte leakage mainly occurs, the leakage sensor 200 may quickly, accurately, reliably and effectively detect the leakage of the electrolyte. Accordingly, accidents such as fire may be prevented in advance.

The first portion P1 or the second portion P2 may include an entire area of the case 100 where a predetermined hole is provided or where a predetermined hole is to be provided. Here, the first conductor 222 or the second conductor 224 may surround the predetermined hole.

Accordingly, when the internal pressure of the case 100 increases, the internal material of the case 100 may be quickly and easily discharged to the outside through a predetermined hole without being obstructed by the leakage sensor 200. As a result, accidents such as explosion and fire may be prevented.

According to the embodiments of the present invention, the leakage sensor 200 may further include a circuit board 210 coupled to the case 100 and having the conductor 220 provided therein. The circuit board 210 may include a first hole H1 corresponding to the first portion P1 and a second hole H2 corresponding to the second portion P2. The first conductor 222 may surround the first hole H1. The second conductor 224 may surround the second hole H2.

Accordingly, the leakage sensor 200 capable of detecting electrolyte leakage in two portions of the battery cell 10 may be achieved with a single circuit board 210. Accordingly, the embodiment of the leakage sensor 200 may be facilitated at low cost with a simple configuration, and manufacturing and maintenance of a battery cell 10 capable of detecting electrolyte leakage may be facilitated.

According to the embodiments of the present invention, the third conductor 226 may be provided between the first conductor 222 and the second conductor 224.

Accordingly, since the third conductor 226 is disposed between the first conductor 222 and the second conductor 224 where there is a high probability of the presence of a leaked electrolyte, leakage detection performance may be improved.

According to the embodiments of the present invention, the first conductor 222 may include a first wrapping portion WC1 surrounding the first portion P1 and a second wrapping portion WC2 may surrounding the first wrapping portion WC1 with a predetermined distance therebetween. The second conductor 224 may include: a fifth wrapping portion WC5 may surround the second portion P2; and a sixth wrapping portion WC6 may surround the fifth wrapping portion WC5 with a predetermined distance therebetween or a sixth wrapping portion WC6 surrounded by the fifth wrapping portion WC5 with a predetermined distance therebetween to surround the second portion P2. The third conductor 226 may include: a first connecting portion CCl may connect the first wrapping portion WC1 and the fifth wrapping portion WC5; and a second connecting portion CC2 may connect the second wrapping portion WC2 and the sixth wrapping portion WC6, the second connecting portion CC2 spaced apart from the first connecting portion CC1 by a predetermined distance. The first wrapping portion WC1, the second wrapping portion WC2, the fifth wrapping portion WC5, the sixth wrapping portion WC6, the first connecting portion CC1 and the second connecting portion CC2 may constitute the electric circuit. At least one of the resistance, the current or the voltage may change when the leaking electrolyte is simultaneously in contact with the first wrapping portion WC1 and the second wrapping portion WC2, simultaneously in contact with the fifth wrapping portion WC5 and the sixth wrapping portion WC6, or simultaneously in contact with the first connecting portion CC1 and the second connecting portion CC2 such that the first wrapping portion WC1 and the second wrapping portion WC2 are electrically connected by the leaked electrolyte, the fifth wrapping portion WC5 and the sixth wrapping portion WC6 are electrically connected by the leaked electrolyte, or the first connecting portion CC1 and the second connecting portion CC2 are electrically connected by the leaked electrolyte.

Accordingly, the embodiment of the leakage sensor 200 capable of detecting electrolyte leakage in two portions of the battery cell 10 may be facilitated at low cost with a simple configuration.

According to the embodiments of the present invention, the first conductor 222 may include a third wrapping portion WC3 surrounding the second wrapping portion WC2 with a predetermined distance therebetween, The second conductor 224 may include a seventh wrapping portion WC7 surrounding the sixth wrapping portion WC6 with a predetermined distance therebetween or a seventh wrapping portion WC7 surrounded by the sixth wrapping portion WC6 with a predetermined distance therebetween to surround the second portion P2. The third conductor 226 may include a third connecting portion CC3 may connect the third wrapping portion WC3 and the seventh wrapping portion WC7, the third connecting portion CC3 spaced apart from the second connecting portion CC2 by a predetermined distance. The third wrapping portion WC3, the seventh wrapping portion WC7 and the third connecting portion CC3 may constitute the electric circuit. At least one of the resistance, the current or the voltage of the electric circuit may change when the leaked electrolyte is simultaneously in contact with the first wrapping portion WC1 and the second wrapping portion WC2, simultaneously in contact with the second wrapping portion WC2 and the third wrapping portion WC3, simultaneously in contact with the fifth wrapping portion WC5 and the sixth wrapping portion WC6, simultaneously in contact with the sixth wrapping portion WC6 and the seventh wrapping portion WC7, simultaneously in contact with the first connecting portion CC1 and the second connecting portion CC2, or simultaneously in contact with the second connecting portion CC2 and the third connecting portion CC3 such that the first wrapping portion WC1 and the second wrapping portion WC2 are electrically connected by the leaked electrolyte, the second wrapping portion WC2 and the third wrapping portion WC3 are electrically connected by the leaked electrolyte, the fifth wrapping portion WC5 and the sixth wrapping portion WC6 are electrically connected by the leaked electrolyte, the sixth wrapping portion WC6 and the seventh wrapping portion WC7 are electrically connected by the leaked electrolyte, the first connecting portion CC1 and the second connecting portion CC2 are electrically connected by the leaked electrolyte, or the second connecting portion CC2 and the third connecting portion CC3 are the electrically connected by leaked electrolyte.

Accordingly, the leakage detection area or the leakage detection width of the leakage sensor 200 may be increased, or the separation distance between the first wrapping portion WC1 and the second wrapping portion WC2, the second wrapping portion WC2 and the third wrapping portion WC3, the fifth wrapping portion WC5 and the sixth wrapping portion WC6, the sixth wrapping portion WC6 and the seventh wrapping portion WC7, the first connecting portion CC1 and the second connecting portion CC2, or the second connecting portion CC2 and the third connecting portion CC3 may be reduced such that the performance or sensitivity of the leakage sensor 200 may be improved.

According to the embodiments of the present invention, the first wrapping portion WC1, the fifth wrapping portion WC5, the first connecting portion CC1, the third wrapping portion WC3, the seventh wrapping portion WC7 and the third connecting portion CC3 may be connected to one another.

Accordingly, the embodiment of the leakage sensor 200 may be facilitated at low cost with a simple configuration.

According to the embodiments of the present invention, the first conductor 222 may include a fourth wrapping portion WC4 surrounding the third wrapping portion WC3 with a predetermined distance therebetween. The second conductor 224 may include an eighth wrapping portion WC8 surrounding the seventh wrapping portion WC7 with a predetermined distance therebetween or an eighth wrapping portion WC8 surrounded by the seventh wrapping portion WC7 with a predetermined distance therebetween to surround the second portion P2. The third conductor 226 may include a fourth connecting portion CC4 connecting the fourth wrapping portion WC4 and the eighth wrapping portion WC8, the fourth connecting portion CC4 spaced apart from the third connecting portion CC3 by a predetermined distance. The fourth wrapping portion WC4, the eighth wrapping portion WC8 and the fourth connecting portion CC4 may constitute the electric circuit. At least one of the resistance, the current or the voltage of the electric circuit may change when the leaked electrolyte is simultaneously in contact with the first wrapping portion WC1 and the second wrapping portion WC2, simultaneously in contact with the second wrapping portion WC2 and the third wrapping portion WC3, simultaneously in contact with the third wrapping portion WC3 and the fourth wrapping portion WC4, simultaneously in contact with the fifth wrapping portion WC5 and the sixth wrapping portion WC6, simultaneously in contact with the sixth wrapping portion WC6 and the seventh wrapping portion WC7, simultaneously in contact with the seventh wrapping portion WC7 and the eighth wrapping portion WC8, simultaneously in contact with the first connecting portion CC1 and the second connecting portion CC2, simultaneously in contact with the second connecting portion CC2 and the third connecting portion CC3, or simultaneously in contact with the third connecting portion CC3 and the fourth connecting portion CC4 such that the first wrapping portion WC1 and the second wrapping portion WC2 are electrically connected by the leaked electrolyte, the second wrapping portion WC2 and the third wrapping portion WC3 are electrically connected by the leaked electrolyte, the third wrapping portion WC3 and the fourth wrapping portion WC4 are electrically connected by the leaked electrolyte, the fifth wrapping portion WC5 and the sixth wrapping portion WC6 portion WC6 are electrically connected by the leaked electrolyte, the sixth wrapping portion WC6 and the seventh wrapping portion WC7 are electrically connected by the leaked electrolyte, the seventh wrapping portion WC7 and the eighth wrapping portion WC8 are electrically connected by the leaked electrolyte, the first connecting portionCC1 and the second connecting portionCC2 are electrically connected by the leaked electrolyte, the second connecting portionCC2 and the third connecting portionCC3 are electrically connected by the leaked electrolyte, or the third connecting portionCC3 and the fourth connecting portionCC4 are electrically connected by the leaked electrolyte.

Accordingly, the leakage detection area or the leakage detection width of the leakage sensor 200 may be increased, or the separation distance between the first wrapping portion WC1 and the second wrapping portion WC2, the second wrapping portion WC2 and the third wrapping portion WC3, the third wrapping portion WC3 and the fourth wrapping portion WC4, the fifth wrapping portion WC5 and the sixth wrapping portion WC6, the sixth wrapping portion WC6 and the seventh wrapping portion WC7, the seventh wrapping portion WC7 and the eighth wrapping portion WC8, the first connecting portion CC1 and the second connecting portion CC2, the second connecting portion CC2 and the third connecting portion CC3, or the third connecting portion CC3 and the fourth connecting portion CC4 may be reduced such that the performance or sensitivity of the leakage sensor 200 may be improved.

According to the embodiments of the present invention, the first wrapping portion WC1, the fifth wrapping portion WC5, the first connecting portion CC1, the third wrapping portion WC3, the seventh wrapping portion WC7 and the third connecting portion CC3 may be connected to one another. The second wrapping portion WC2, the sixth wrapping portion WC6, the second connecting portion CC2, the fourth wrapping portion WC4, the eighth wrapping portion WC8 and the fourth connecting portion CC4 may be connected to one another.

Accordingly, the embodiment of the leakage sensor 200 may be facilitated at low cost with a simple configuration.

According to the embodiments of the present invention, a battery cell capable of detecting electrolyte leakage may include: an electrode assembly; an electrolyte; a case 100 accommodating the electrode assembly and injected with the electrolyte, the case 100 including a first portion P1; and a leakage sensor 200 coupled to and installed at the case 100, the leakage sensor 200 detecting electrolyte leaking to the outside through the first portion P1. The leakage sensor 200 may include a conductor 220 surrounding the first portion P1 and constituting an electric circuit, At least one of a resistance, a current or a voltage of the electric circuit may change when the leaked electrolyte contacts with the conductor 220. The conductor 220 may include: a first wrapping portion WC1 surrounding the first portion P1; a second wrapping portion WC2 surrounding the first wrapping portion WC1 with a predetermined distance therebetween; and a third wrapping portion WC3 surrounding the second wrapping portion WC2 with a predetermined distance therebetween. The first wrapping portion WC1, the second wrapping portion WC2 and the third wrapping portion WC3 may constitute the electric circuit. At least one of the resistance, the current or the voltage of the electric circuit may change when the leaked electrolyte is simultaneously in contact with the first wrapping portion WC1 and the second wrapping portion WC2, or simultaneously in contact with the second wrapping portion WC2 and the third wrapping portion WC3 such that the first wrapping portion WC1 and the second wrapping portion WC2 are electrically connected by the leaked electrolyte, or the second wrapping portion WC2 and the third wrapping portion WC3 are electrically connected by the leaked electrolyte.

Accordingly, the leakage detection area or the leakage detection width around the first portion P1 may be increased, or the separation distance between the first wrapping portion WC1 and the second wrapping portion WC2, or the second wrapping portion WC2 and the third wrapping portion WC3 may be reduced. As a result, the performance or sensitivity of the leakage sensor 200 may be improved.

According to the embodiments of the present invention, the first portion P1 may include an entire area of the case 100 where a predetermined hole is provided or where a predetermined hole is to be provided. Here, the conductor 220 may surround the predetermined hole.

Accordingly, when the internal pressure of the case 100 increases, the internal material of the case 100 may be quickly and easily discharged to the outside through a predetermined hole without being obstructed by the leakage sensor 200. As a result, accidents such as explosion and fire may be prevented.

According to the embodiments of the present invention, the first wrapping portion WC1 and the third wrapping portion WC3 may be connected to each other.

Accordingly, the embodiment of the leakage sensor 200 may be facilitated at low cost with a simple configuration.

According to the embodiments of the present invention, the conductor 220 may further include a fourth wrapping portion WC4 surrounding the third wrapping portion WC3 with a predetermined distance therebetween and constituting the electric circuit. At least one of the resistance, the current or the voltage of the electric circuit may change when the leaking electrolyte is simultaneously in contact with the first wrapping portion WC1 and the second wrapping portion WC2, simultaneously in contact with the second wrapping portion WC2 and the third wrapping portion WC3, or simultaneously in contact with the third wrapping portion WC3 and the fourth wrapping portion WC4 such that the first wrapping portion WC1 and the second wrapping portion WC2 are electrically connected by the leaking electrolyte, the second wrapping portion WC2 and the third wrapping portion WC3 are electrically connected by the leaking electrolyte, or the third wrapping portion WC3 and the fourth wrapping portion WC4 are electrically connected by the leaking electrolyte.

Accordingly, the leakage detection area or the leakage detection width around the first portion P1 may be increased, or the separation distance between the first wrapping portion WC1 and the second wrapping portion WC2, the second wrapping portion WC2 and the third wrapping portion WC3, or the third wrapping portion WC3 and the fourth wrapping portion WC4 may be reduced such that the performance or sensitivity of the leakage sensor 200 may be improved.

According to the embodiments of the present invention, the first wrapping portion WC1 and the third wrapping portion WC3 may be connected to each other. The second wrapping portion WC2 and the fourth wrapping portion WC4 may be connected to each other.

Accordingly, the embodiment of the leakage sensor 200 may be facilitated at low cost with a simple configuration.

According to the embodiments of the present invention, the battery module may include a plurality of battery cells.

Accordingly, since the electrolyte leakage of each of the plurality of battery cells 10 of the battery module 1 may be detected, the electrolyte leakage may be detected quickly and accurately. As a result, accidents such as fire may be prevented in advance. In addition, the electrolyte leakage of the battery module 1 may be detected in real time.

According to the embodiments of the present invention, the battery cell may further include: a housing 20 accommodating the plurality of battery cells; and an ICB (Inter Connected Board) 30 coupled to the housing 20 or the plurality of battery cells. The ICB 30 may be connected to a conductor 220 of a leakage sensor 200 of each of the plurality of battery cells to apply a current to an electric circuit and measure or detect at least one of a resistance, a current or a voltage of the electric circuit.

Accordingly, the leakage sensor 200 may be easily operated at low cost with a simple configuration, and may detect electrolyte leakage of the battery module 1 in real time. For example, since the leakage sensor 200 may be operated using a conventional ICB 30 for measuring the voltage of a battery cell 10 or a battery module 1, the embodiment of the leakage sensor 200 may be facilitated at low cost with a simple configuration.

In addition to the advantageous effects described above, specific effects of the present invention will be described further while describing specific details of the present invention.

### [BRIEF DESCRIPTION OF DRAWINGS]

FIG. 1 is an exploded perspective view schematically illustrating a battery module according to an embodiment of the present invention.
FIGS. 2 and 3 are perspective view and exploded perspective view illustrating the battery cell of FIG. 1.
FIG. 4 is a plan view illustrating the leakage sensor of FIGS. 1 to 3.
FIG. 5 is an enlarged view of the dotted square portion of FIG. 4.
FIG. 6 is a plan view illustrating a leakage sensor according to another embodiment of the present invention.

### [DETAILED DESCRIPTION OF THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

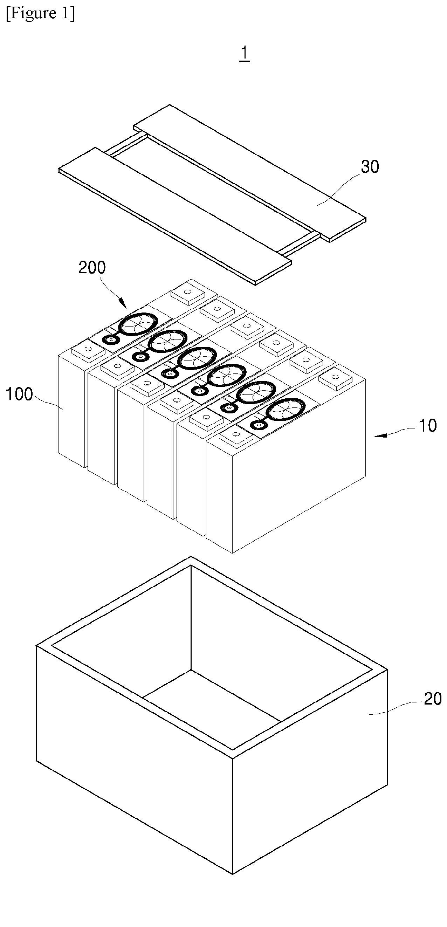

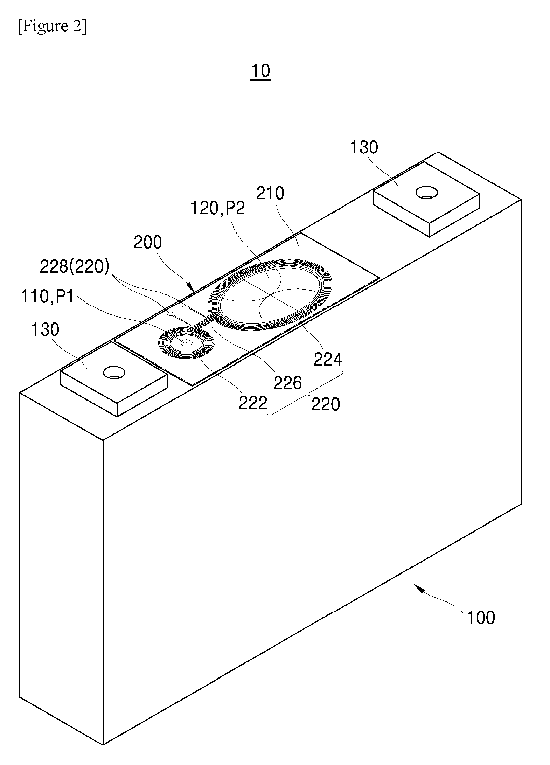

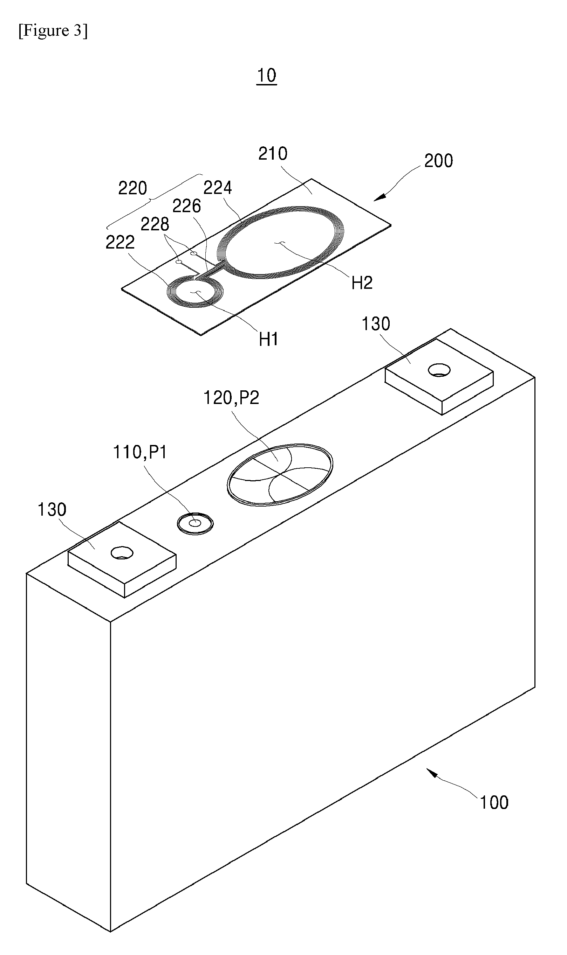

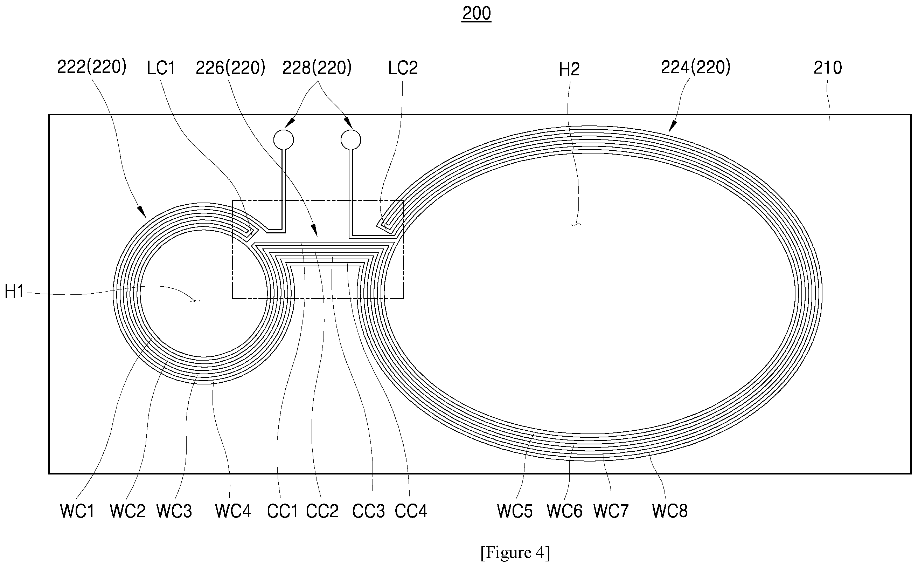

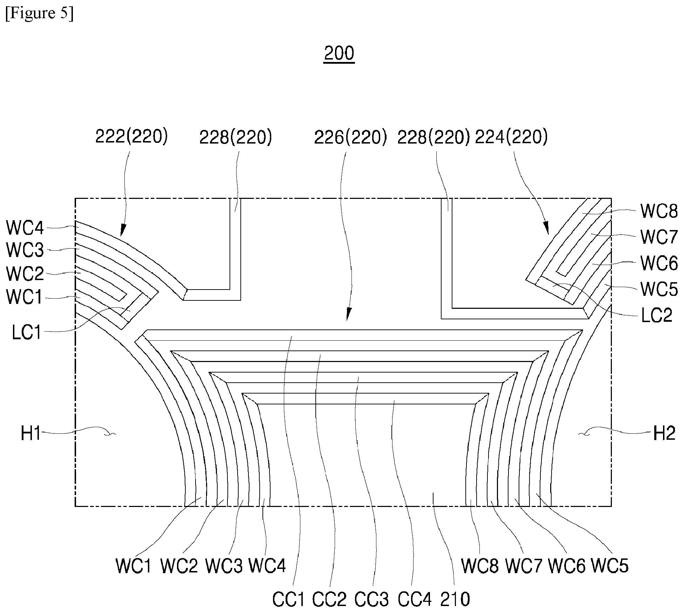

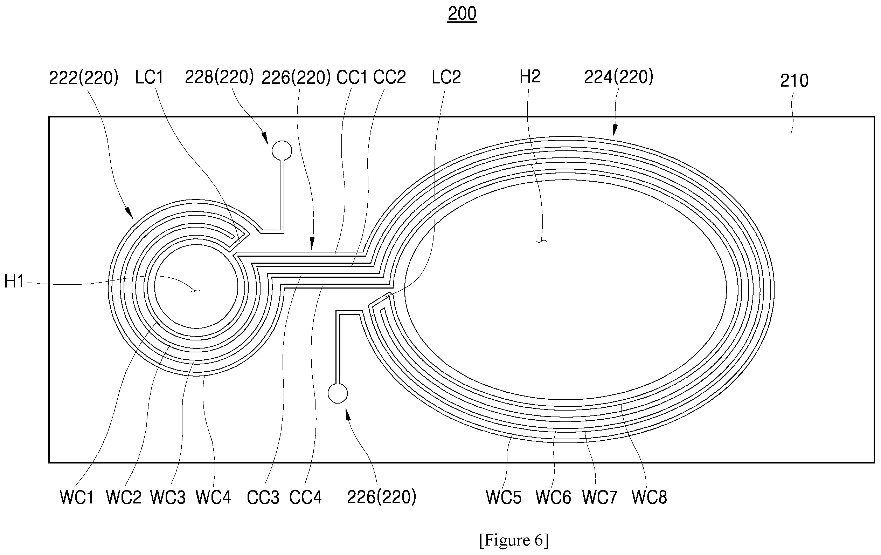

FIG. 1 is an exploded perspective view schematically illustrating a battery module according to an embodiment of the present invention. FIGS. 2 and 3 are perspective view and exploded perspective view illustrating the battery cell of FIG. 1. FIG. 4 is a plan view illustrating the leakage sensor of FIGS. 1 to 3. FIG. 5 is an enlarged view of the dotted square portion of FIG. 4. FIG. 6 is a plan view illustrating a leakage sensor according to another embodiment of the present invention.

### [BATTERY MODULE]

Referring to FIG. 1, a battery module 1 according to an embodiment of the present invention may include a plurality of battery cells 10. The battery module 1 may include a housing 20 and an ICB 30.

As described hereinafter, each of the plurality of battery cells 10 may include a leakage sensor 200 that detects electrolyte leaking from the case 100 of the battery cell 10.

Accordingly, since the electrolyte leakage of each of the plurality of battery cells 10 of the battery module 1 may be detected, the electrolyte leakage may be detected quickly and accurately. As a result, accidents such as fire may be prevented in advance. In addition, the electrolyte leakage of the battery module 1 may be detected in real time.

The housing 20 may have a hollow space with an open upper end and have an approximately rectangular shape. The housing 20 may accommodate the plurality of battery cells 10.

The ICB 30 may be coupled to the housing 20 or the plurality of battery cells 10. Here, the ICB 30 may refer to a conventional circuit board equipped with at least one element that delivers information between the battery cell 10 and the BMS (not shown). For example, the ICB 30 may be provided with at least one element that delivers information sensed from the terminal 130 of the battery cell 10 such as voltage information, to the BMS.

In addition, the BMS may refer to a system that monitors the state of the battery cell 10 such as temperature, voltage and current, and controls the balancing of the battery cell, charging or discharging through SOC (State Of Charge) estimation, etc. based on the monitored state of the battery cell.

The leakage sensor 200 described below of each battery cell 10 may be connected to the ICB 30. For example, the conductor 220 of the leakage sensor 200 described below of each battery cell 10 may be connected to the ICB 30 through wire welding. Accordingly, the ICB 30 may apply current to the conductor 220 of the leakage sensor 200 and measure or detect at least one of the resistance, the current or the voltage of the electric circuit constituted by the conductor 220.

Accordingly, the leakage sensor 200 may be easily operated at low cost with a simple configuration, and may detect electrolyte leakage of the battery module 1 in real time. For example, since the leakage sensor 200 may be operated using a conventional ICB 30 for measuring the voltage of a battery cell 10 or a battery module 1, the embodiment of the leakage sensor 200 may be facilitated at low cost with a simple configuration.

### [FIRST EMBODIMENT OF THE BATTERY CELL]

Referring to FIGS. 2 and 3, the battery cell 10 according to the first embodiment may include an electrode assembly (not shown), an electrolyte (not shown), a case 100 and a leakage sensor 200.

The battery cell 10 may be a prismatic battery cell 10 as shown. However, the battery cell 10 is not limited thereto.

Hereinafter, each element will be described.

### [ELECTRODE ASSEMBLY, ELECTROLYTE AND CASE]

The electrode assembly (not shown) may include an anode, a cathode and a separator interposed therebetween. The electrode assembly (not shown) may be a jelly-roll type (winding type), a stack type (laminated type) or a stack/folding type.

The electrolyte (not shown) may be injected into a case 100 and the electrode assembly may be impregnated with electrolyte.

The case 100 may be a rectangular parallelepiped. The electrode assembly may be accommodated in the case 100 and the electrolyte may be injected into the case 100. The case 100 may include a liquid injection port 110 and a vent 120. The case 100 may include a pair of terminals 130.

The liquid injection port 110 may be used for injecting an electrolyte. The liquid injection port 110 may be sealed after the electrolyte is injected. For example, the liquid injection port 110 may include a liquid injection hole through which the electrolyte is injected and a stopper that seals the liquid injection hole after the electrolyte is injected.

The vent 120 may be opened by the internal pressure of the case 100. For example, the vent 120 may include a notch that ruptures at a set internal pressure to be opened. The vent hole may be formed in the case 100 by the vent 120 when opened by the internal pressure.

The liquid injection port 110 and the vent 120 may be provided on the upper surface of the case 100.

A pair of terminals 130 may be connected to the anode and cathode of the electrode assembly, respectively. The pair of terminals 130 may be in contact with or connected to the ICB 30 described above.

Meanwhile, the case 100 may include a first portion P1 and a second portion P2 spaced apart from each other by a predetermined distance. The first portion P1 may be a liquid injection port 110. The second portion P2 may be a vent 120.

The first portion P1 or the second portion P2 may include the entire area of the case 100 where a predetermined hole is provided or where a predetermined hole is to be provided. Here, the predetermined hole may be, for example, a liquid injection hole or a vent hole.

### [FIRST EMBODIMENT OF THE LEAKAGE SENSOR]

The leakage sensor 200 according to the first embodiment may be coupled to and installed at the case 100. The leakage sensor 200 may detect the electrolyte leaking to the outside through the first portion P1 and the second portion P2.

Referring further to FIGS. 4 and 5, the leakage sensor 200 according to the first embodiment may include a conductor 220. The leakage sensor 200 according to the first embodiment may further include a circuit board 210.

The circuit board 210 may be coupled to the case 100. For example, the circuit board 210 may be bonded to the case 100. The circuit board 210 may be a flexible printed circuit with an insulating film. The circuit board 210 may include PET, PI or PEN.

The circuit board 210 may include a first hole H1 and a second hole H2. The first hole H1 may correspond to the first portion P1 of the case 100. The second hole H2 may correspond to the second portion P2 of the case 100.

The conductor 220 may be provided on the circuit board 210. The conductor 220 may surround the first portion P1 and the second portion P2 of the case 100.

For example, the conductor 220 may be a circuit pattern in a flexible printed circuit 210. Accordingly, the leakage sensor 200 may be easily implemented at low cost with a simple configuration. In addition, the weight of the leakage sensor 200 may be reduced. In addition, the leakage sensor 200 may be easily installed because the leakage sensor 200 may be bent.

The leakage sensor 200 may include a conductor 220 constituting an electric circuit. At least one of a resistance, a current or a voltage of the electric circuit may change when leaked electrolyte contacts with the conductor 220.

For example, a weak current may constantly flow through the conductor 220 of the electric circuit, and when the leaked electrolyte contacts with the conductor 220, the resistance of the electric circuit may decrease. As another example, the current may not constantly flow through the conductor 220, and when the leaked electrolyte contacts with the conductor 220, the current may flow through the conductor 220.

The electric circuit constituted by the conductor 220 may be connected to the ICB 30 described above. When the resistance, etc., of the electric circuit changes, the ICB 30 may detect the change and transmit an electric signal to the BMS.

The conductor 220 may include a first conductor 222, a second conductor 224, and a third conductor 226. The conductor 220 may further include a terminal 228. The conductor 220 may further include a first link portion LC1 and/or a second link portion LC2.

The first conductor 222 may surround the first portion P1 of the case 100. For example, the first conductor 222 may surround the first hole H1 of the circuit board 210.

The second conductor 224 may surround the second portion P2. For example, the second conductor 224 may surround the second hole H2 of the circuit board 210.

As described above, the first conductor 222 may surround the first hole H1 of the circuit board 210, and the second conductor 224 may surround the second hole H2 of the circuit board 210.

Accordingly, the leakage sensor 200 capable of detecting electrolyte leakage in two portions of the battery cell 10 may be achieved with a single circuit board 210. Accordingly, the embodiment of the leakage sensor 200 may be facilitated at low cost with a simple configuration, and manufacturing and maintenance of a battery cell 10 capable of detecting electrolyte leakage may be facilitated.

The third conductor 226 may connect the first conductor 222 and the second conductor 224.

The third conductor 226 may be provided between the first conductor 222 and the second conductor 224.

Accordingly, since the third conductor 226 is disposed between the first conductor 222 and the second conductor 224 where there is a high probability of the presence of a leaked electrolyte, leakage detection performance may be improved.

The first conductor 222, the second conductor 224 and the third conductor 226 may constitute the electric circuit.

Accordingly, a battery cell 10 capable of detecting electrolyte leakage in two portions P1 and P2 thereof may be easily implemented at low cost with a simple configuration. In addition, electrolyte leakage in the two portions of a battery cell 10 may be detected in real time.

In addition, since the conductor 220 of the leakage sensor 200 surrounds the first portion P1 and the second portion P2, the leakage sensor 200 may quickly, accurately, reliably and effectively detect electrolyte leakage in case that the electrolyte mainly leaks through the first portion P1 and the second portion P2. As a result, accidents such as fire may be prevented in advance.

In addition, since the third conductor 226 connects the first conductor 222 and the second conductor 224 and constitutes an electric circuit similar to the first conductor 222 and the second conductor 224, the leakage sensor 200 may be easily implemented at low cost with a simple configuration. For example, as long as any one of the first conductor 222, the second conductor 224 and the third conductor 226 is connected to the anode of an external power supply and any one of the first conductor 222, the second conductor 224, and the third conductor 226 is connected to the cathode of the same external power supply, the leakage sensor 200 may detect any electrolytes leaked through the first portion P1 and the second portion P2. That is, it is not necessary to individually connect the first conductor 222 and the second conductor 224 to an external power supply.

In addition, since it is possible to detect not only the electrolyte in contact with the first conductor 222 or the second conductor 224 but also the electrolyte in contact with the third conductor 226, the performance of the leakage sensor 200 may be improved.

Here, the first portion P1 surrounded by the first conductor 222 may be a liquid injection port 110, or the second portion P2 surrounded by the second conductor 224 may be a vent 120.

Accordingly, since the conductor 220 of the leakage sensor 200 surrounds the liquid injection port 110 and/or the vent 120 where the electrolyte leakage mainly occurs, the leakage sensor 200 may quickly, accurately, reliably and effectively detect the leakage of the electrolyte. Accordingly, accidents such as fire may be prevented in advance.

The first conductor 222 or the second conductor 224 may surround the predetermined hole (e.g. liquid injection hole or vent hole) provided at the case 100 or to be provided at the case 100.

Accordingly, when the internal pressure of the case 100 increases, the internal material of the case 100 may be quickly and easily discharged to the outside through a predetermined hole without being obstructed by the leakage sensor 200. As a result, accidents such as explosion and fire may be prevented.

A pair of terminals 228 may be provided. The terminal 228 may be connected to the first conductor 222, the second conductor 224, or the third conductor 226. The pair of terminals 228 may extended outward with respect to the first conductor 222, the second conductor 224, or the third conductor 226 (FIGS. 4 and 5).

The pair of terminals 228 may be connected to the first electrode and the second electrode of an external power source. For example, the above-described ICB 30 may be connected to an external power source, and the terminal 228 may be connected to the ICB 30 through wire welding.

The first link portion LC1 and the second link portion LC2 will be described later.

Hereinafter, the first conductor 222, the second conductor 224 and the third conductor 226 will be described in detail.

The first conductor 222 may include a first wrapping portion WC1 and a second wrapping portion WC2, The first conductor 222 may further include a third wrapping portion WC3. The first conductor 222 may further include a fourth wrapping portion WC4.

The first wrapping portion WC1 may surround the first portion P1. For example, the first wrapping portion WC1 may surround the first hole H1 of the circuit board 210.

The second wrapping portion WC2 may surround the first wrapping portion WC1 with a predetermined distance therebetween.

The third wrapping portion WC3 may surround the second wrapping portion WC2 with a predetermined distance therebetween.

The fourth wrapping portion WC4 may surround the third wrapping portion WC3 with a predetermined distance therebetween.

The second conductor 224 may include a fifth wrapping portion WC5 and a sixth wrapping portion WC6. The second conductor 224 may further include a seventh wrapping portion WC7. The second conductor 224 may further include an eighth wrapping portion WC8.

The fifth wrapping portion WC5 may surround the second portion P2. For example, the fifth wrapping portion WC5 may surround the second hole H2 of the circuit board 210.

The sixth wrapping portion WC6 may surround the fifth wrapping portion WC5 with a predetermined distance therebetween.

The seventh wrapping portion WC7 may surround the sixth wrapping portion WC6 with a predetermined distance therebetween.

The eighth wrapping portion WC8 may surround the seventh wrapping portion WC7 with a predetermined distance therebetween.

The third conductor 226 may include a first connecting portion CC1 and a second connecting portion CC2. The third conductor 226 may further include a third connecting portion CC3. The third conductor 226 may further include a fourth connecting portion CC4.

The first connecting portion CC1 may connect the first wrapping portion WC1 and the fifth wrapping portion WC5.

The second connecting portion CC2 may connect the second wrapping portion WC2 and the sixth wrapping portion WC6, wherein the second connecting portion CC2 may be spaced apart from the first connecting portion CC1 by a predetermined distance.

The third connecting portion CC3 may connect the third wrapping portion WC3 and the seventh wrapping portion WC7, wherein the third connecting portion CC3 is spaced apart from the second connecting portion CC2 by a predetermined distance.

The fourth connecting portion CC4 may connect the fourth wrapping portion WC4 and the eighth wrapping portion WC8, wherein the fourth connecting portion CC4 is spaced apart from the third connecting portion CC3 by a predetermined distance.

The first link portion LC1 may connect the first wrapping portion WC1, the fifth wrapping portion WC5 and the first connecting portion CC1 with the third wrapping portion WC3, the seventh wrapping portion WC7 and the third connecting portion CC3. For example, the first link portion LC1 may connect an end of the first wrapping portion WC1 to an end of the third wrapping portion WC3 (FIGS. 4 and 5).

The second link portion LC2 may connect the second wrapping portion WC2, the sixth wrapping portion WC6 and the second connecting portion CC2 with the fourth wrapping portion WC4, the eighth wrapping portion WC8 and the fourth connecting portion CC4. For example, the second link portion LC2 may connect the end of the sixth wrapping portion WC6 to the end of the eighth wrapping portion WC8 (FIGS. 4 and 5).

Meanwhile, the first wrapping portion WC1, the second wrapping portion WC2, the fifth wrapping portion WC5, the sixth wrapping portion WC6, the first connecting portion CC1 and the second connecting portion CC2 may constitute the electric circuit.

At least one of the resistance, the current or the voltage may change when the leaking electrolyte is simultaneously in contact with the first wrapping portion WC1 and the second wrapping portion WC2, simultaneously in contact with the fifth wrapping portion WC5 and the sixth wrapping portion WC6, or simultaneously in contact with the first connecting portion CC1 and the second connecting portion CC2 such that the first wrapping portion WC1 and the second wrapping portion WC2 are electrically connected by the leaked electrolyte, the fifth wrapping portion WC5 and the sixth wrapping portion WC6 are electrically connected by the leaked electrolyte, or the first connecting portion CC1 and the second connecting portion CC2 are electrically connected by the leaked electrolyte.

Accordingly, the embodiment of the leakage sensor 200 capable of detecting electrolyte leakage in two portions of the battery cell 10 may be facilitated at low cost with a simple configuration.

When the first conductor 222 further includes a third wrapping portion WC3, the second conductor 224 further includes a seventh wrapping portion WC7, and the third conductor 226 further includes a third connecting portion CC3, the third wrapping portion WC3, the seventh wrapping portion WC7 and the third connecting portion CC3 may also constitute the electric circuit.

Here, at least one of the resistance, the current or the voltage of the electric circuit may change when the leaked electrolyte is simultaneously in contact with the first wrapping portion WC1 and the second wrapping portion WC2, simultaneously in contact with the second wrapping portion WC2 and the third wrapping portion WC3, simultaneously in contact with the fifth wrapping portion WC5 and the sixth wrapping portion WC6, simultaneously in contact with the sixth wrapping portion WC6 and the seventh wrapping portion WC7, simultaneously in contact with the first connecting portion CC1 and the second connecting portion CC2, or simultaneously in contact with the second connecting portion CC2 and the third connecting portion CC3 such that the first wrapping portion WC1 and the second wrapping portion WC2 are electrically connected by leaked electrolyte, the second wrapping portion WC2 and the third wrapping portion WC3 are electrically connected by leaked electrolyte, the fifth wrapping portion WC5 and the sixth wrapping portion WC6 are electrically connected by leaked electrolyte, the sixth wrapping portion WC6 and the seventh wrapping portion WC7 are electrically connected by leaked electrolyte, the first connecting portion CC1 and the second connecting portion CC2 are electrically connected by leaked electrolyte, or the second connecting portion CC2 and the third connecting portion CC3 are electrically connected by leaked electrolyte.

Accordingly, the leakage detection area or the leakage detection width of the leakage sensor 200 may be increased, or the separation distance between the first wrapping portion WC1 and the second wrapping portion WC2, the second wrapping portion WC2 and the third wrapping portion WC3, the fifth wrapping portion WC5 and the sixth wrapping portion WC6, the sixth wrapping portion WC6 and the seventh wrapping portion WC7, the first connecting portion CC1 and the second connecting portion CC2, or the second connecting portion CC2 and the third connecting portion CC3 may be reduced such that the performance or sensitivity of the leakage sensor 200 may be improved.

Here, the first wrapping portion WC1, the fifth wrapping portion WC5, the first connecting portion CC1, the third wrapping portion WC3, the seventh wrapping portion WC7 and the third connecting portion CC3 may be connected to one another. For example, as described above, by connecting the end of the first wrapping portion WC1 and the end of the third wrapping portion WC3 with the first link portion LC1, the first wrapping portion WC1, the fifth wrapping portion WC5, and the first connecting portion CC1, the third wrapping portion WC3, the seventh wrapping portion WC7 and the third connecting portion CC3 are all connected to one another (FIGS. 4 and 5).

Accordingly, the embodiment of the leakage sensor 200 may be facilitated at low cost with a simple configuration.

For example, as long as any one (e.g., the fifth wrapping portion) of the first wrapping portion WC1, the third wrapping portion WC3, the fifth wrapping portion WC5 and the seventh wrapping portion WC7 and the first connecting portion CC1 and the third connecting portion CC3 is connected to the first electrode (e.g., anode) of an external power source, and any one of the second wrapping portion WC2 and the sixth wrapping portion WC6 and the second connecting portion CC2 is connected to the second electrode (e.g., cathode) of the same external power source, the leakage sensor 200 may detect any electrolyte that is simultaneously in contact with the first and second wrapping portions, simultaneously in contact with the second and third wrapping portions, simultaneously in contact with the fifth and sixth wrapping portions, simultaneously in contact with the sixth and seventh wrapping portions, simultaneously in contact with the first and second connecting portions, and simultaneously in contact with the second and third connecting portions. That is, since only single external power source is required, the electric circuit may be simplified and the cost and installation space may be reduced.

When the first conductor 222 further includes a fourth wrapping portion WC4, the second conductor 224 further includes an eighth wrapping portion WC8 and the third conductor 226 further includes a fourth connecting portion CC4, the fourth wrapping portion WC4, the eighth wrapping portion WC8 and the fourth connecting portion CC4 may also constitute the electric circuit.

Here, at least one of the resistance, the current or the voltage of the electric circuit may change when the leaked electrolyte is simultaneously in contact with the first wrapping portion WC1 and the second wrapping portion WC2, simultaneously in contact with the second wrapping portion WC2 and the third wrapping portion WC3, simultaneously in contact with the third wrapping portion WC3 and the fourth wrapping portion WC4, simultaneously in contact with the fifth wrapping portion WC5 and the sixth wrapping portion WC6, simultaneously in contact with the sixth wrapping portion WC6 and the seventh wrapping portion WC7, simultaneously in contact with the seventh wrapping portion WC7 and the eighth wrapping portion WC8, simultaneously in contact with the first connecting portion CC1 and the second connecting portion CC2, simultaneously in contact with the second connecting portion CC2 and the third connecting portion CC3, or simultaneously in contact with the third connecting portion CC3 and the fourth connecting portion CC4 such that the first wrapping portion WC1 and the second wrapping portion WC2 are electrically connected by the leaked electrolyte, the second wrapping portion WC2 and the third wrapping portion WC3 are electrically connected by the leaked electrolyte, the third wrapping portion WC3 and the fourth wrapping portion WC4 are electrically connected by the leaked electrolyte, the fifth wrapping portion WC5 and the sixth wrapping portion WC6 portion WC6 are electrically connected by the leaked electrolyte, the sixth wrapping portion WC6 and the seventh wrapping portion WC7 are electrically connected by the leaked electrolyte, the seventh wrapping portion WC7 and the eighth wrapping portion WC8 are electrically connected by the leaked electrolyte, the first connecting portionCC1 and the second connecting portionCC2 are electrically connected by the leaked electrolyte, the second connecting portionCC2 and the third connecting portionCC3 are electrically connected by the leaked electrolyte, or the third connecting portionCC3 and the fourth connecting portionCC4 are electrically connected by the leaked electrolyte.

Accordingly, the leakage detection area or the leakage detection width of the leakage sensor 200 may be increased, or the separation distance between the first wrapping portion WC1 and the second wrapping portion WC2, the second wrapping portion WC2 and the third wrapping portion WC3, the third wrapping portion WC3 and the fourth wrapping portion WC4, the fifth wrapping portion WC5 and the sixth wrapping portion WC6, the sixth wrapping portion WC6 and the seventh wrapping portion WC7, the seventh wrapping portion WC7 and the eighth wrapping portion WC8, the first connecting portion CC1 and the second connecting portion CC2, the second connecting portion CC2 and the third connecting portion CC3, or the third connecting portion CC3 and the fourth connecting portion CC4 may be reduced such that the performance or sensitivity of the leakage sensor 200 may be improved.

Here, the first wrapping portion WC1, the fifth wrapping portion WC5, the first connecting portion CC1, the third wrapping portion WC3, the seventh wrapping portion WC7 and the third connecting portion CC3 may be connected to one another. In addition, the second wrapping portion WC2, the sixth wrapping portion WC6, the second connecting portion CC2, the fourth wrapping portion WC4, the eighth wrapping portion WC8 and the fourth connecting portion CC4 may be connected to one another.

For example, as described above, by connecting the end of the first wrapping portion WC1 to the end of the third wrapping portion WC3 with the first link portion LC1, the first wrapping portion WC1, the fifth wrapping portion WC5 and the first connecting portion CC1, and the third wrapping portion WC3, the seventh wrapping portion WC7 and the third connecting portion CC3 may be connected to one another (FIGS. 4 and 5). In addition, by connecting the end of the sixth wrapping portion WC6 and the end of the eighth wrapping portion WC8 with the second link portion LC2, the second wrapping portion WC2, the sixth wrapping portion WC6 and the second connecting portion CC2, and the fourth wrapping portion WC4, the eighth wrapping portion WC8 and the fourth connecting portion CC4 may be connected to one another (FIGS. 4 and 5).

Accordingly, the embodiment of the leakage sensor 200 may be facilitated at low cost with a simple configuration.

For example, as long as any one (e.g., the fifth wrapping portion) of the first wrapping portion WC1, the third wrapping portion WC3, the fifth wrapping portion WC5, the seventh wrapping portion WC7, the first connecting portion CC1 and the third connecting portion CC3 is connected to the first electrode (e.g., anode) of an external power source, and any one (e.g., the fourth wrapping portion) among the second wrapping portion WC2, the fourth wrapping portion WC4, the sixth wrapping portion WC6, the eighth wrapping portion WC8, the second connecting portion CC2 and the fourth connecting portion CC4 is connected to the second electrode (e.g., the cathode) of the same external power source, the leakage sensor 200 may detect any electrolyte that is simultaneously in contact with the first and second wrapping portions, simultaneously in contact with the second and third wrapping portions, simultaneously in contact with the third and fourth wrapping portions, simultaneously in contact with the fifth and sixth wrapping portions, simultaneously in contact with the sixth and seventh wrapping portions, simultaneously in contact with the seventh and eighth wrapping portions, simultaneously in contact with the first and second connecting portions, simultaneously in contact with the second and third connecting portions, and simultaneously in contact with the third and fourth connecting portions. That is, since only single external power source is required, the electric circuit may be simplified and the cost and installation space may be reduced.

### [SECOND EMBODIMENT OF LEAKAGE SENSOR]

Referring to FIG. 6, the leakage sensor 200 according to the second embodiment may include a conductor 220 similar to the leakage sensor 200 according to the first embodiment. In addition, the leakage sensor 200 according to the second embodiment may include a circuit board 210. Hereinafter, the description will be focused on the differences between the leakage sensors 200 according to the first and second embodiments.

The sixth wrapping portion WC6 may be surrounded by the fifth wrapping portion WC5 with a predetermined distance therebetween to surround the second portion P2 (e.g. the second hole).

The seventh wrapping portion WC7 may be surrounded by the sixth wrapping portion WC6 with a predetermined distance therebetween to surround the second portion P2 (e.g. the second hole).

The eighth wrapping portion WC8 may be surrounded by the seventh wrapping portion WC7 with a predetermined distance therebetween to surround the second portion P2 (e.g. the second hole).

Descriptions not given in relation to the leakage sensor 200 according to the second embodiment may be inferred from the leakage sensor 200 according to the first embodiment described above.

### [SECOND EMBODIMENT OF BATTERY CELL]

The battery cell 10 according to the second embodiment may include an electrode assembly (not shown), an electrolyte (not shown), a case 100 and a leakage sensor 200 similar to the battery cell 10 according to the first embodiment. Hereinafter, the description will be focused on the differences between the battery cells 10 according to the first and second embodiments.

The case 100 may include a first portion P1. The second portion P2 described above may be omitted.

The first portion P1 may include an entire area of the case 100 where a predetermined hole is provided or where a predetermined hole is to be provided. Here, the predetermined hole may be, for example, a liquid injection hole or a vent hole.

The leakage sensor 200 may detect the electrolyte leaking to the outside through the first portion P1. The conductor 220 of the leakage sensor 200 may surround the first portion P1.

The conductor 220 may include the first conductor 222 described above. The second conductor 224 and the third conductor 226 described above may be omitted.

Therefore, the conductor 220 may include the first wrapping portion WC1, the second wrapping portion WC2 and the third wrapping portion WC3 described above. The conductor 220 may further include the fourth wrapping portion WC4 described above.

The conductor 220 may surround the predetermined hole (e.g. liquid injection hole or vent hole) provided at the case 100 or to be provided at the case 100.

Accordingly, when the internal pressure of the case 100 increases, the internal material of the case 100 may be quickly and easily discharged to the outside through a predetermined hole without being obstructed by the leakage sensor 200. As a result, accidents such as explosion and fire may be prevented.

The first wrapping portion WC1, the second wrapping portion WC2 and the third wrapping portion WC3 may constitute the electric circuit.

At least one of the resistance, the current or the voltage of the electric circuit changes when the leaked electrolyte is simultaneously in contact with the first wrapping portion WC1 and the second wrapping portion WC2, or simultaneously in contact with the second wrapping portion WC2 and the third wrapping portion WC3 such that the first wrapping portion WC1 and the second wrapping portion WC2 are electrically connected by the leaked electrolyte, or the second wrapping portion WC2 and the third wrapping portion WC3 are electrically connected by the leaked electrolyte.

Accordingly, the leakage detection area or the leakage detection width around the first portion P1 may be increased, or the separation distance between the first wrapping portion WC1 and the second wrapping portion WC2, or the second wrapping portion WC2 and the third wrapping portion WC3 may be reduced. As a result, the performance or sensitivity of the leakage sensor 200 may be improved.

The first wrapping portion WC1 and the third wrapping portion WC3 may be connected to each other.

For example, as described above, the end of the first wrapping portion WC1 and the end of the third wrapping portion WC3 may be connected to each other by the first link portion LC1 such that the first wrapping portion WC1 and the third wrapping portion WC3 are electrically connected to each other.

Accordingly, the embodiment of the leakage sensor 200 may be facilitated at low cost with a simple configuration.

When the conductor 220 further includes the fourth wrapping portion WC4, the fourth wrapping portion WC4 may also constitute the electric circuit.

Here, at least one of the resistance, the current or the voltage of the electric circuit may change when the leaking electrolyte is simultaneously in contact with the first wrapping portion WC1 and the second wrapping portion WC2, simultaneously in contact with the second wrapping portion WC2 and the third wrapping portion WC3, or simultaneously in contact with the third wrapping portion WC3 and the fourth wrapping portion WC4 such that the first wrapping portion WC1 and the second wrapping portion WC2 are electrically connected by the leaking electrolyte, the second wrapping portion WC2 and the third wrapping portion WC3 are electrically connected by the leaking electrolyte, or the third wrapping portion WC3 and the fourth wrapping portion WC4 are electrically connected by the leaking electrolyte.

Accordingly, the leakage detection area or the leakage detection width around the first portion P1 may be increased, or the separation distance between the first wrapping portion WC1 and the second wrapping portion WC2, the second wrapping portion WC2 and the third wrapping portion WC3, or the third wrapping portion WC3 and the fourth wrapping portion WC4 may be reduced. As a result, the performance or sensitivity of the leakage sensor 200 may be improved.

Here, the first wrapping portion WC1 and the third wrapping portion WC3 may be connected to each other as described above. In addition, the second wrapping portion WC2 and the fourth wrapping portion WC4 may be connected to each other.

For example, as described above, the end of the first wrapping portion WC1 and the end of the third wrapping portion WC3 may be connected to each other by the first link portion LC1 such that the first wrapping portion WC1 and the third wrapping portion WC3 are electrically connected to each other. In addition, the end of the second wrapping portion WC2 connected to the second connecting portion CC2 and the end of the fourth wrapping portion WC4 connected to the fourth connecting portion CC4 are connected to each other contrary to FIG. 4 such that the second wrapping portion WC2 and the fourth wrapping portion WC4 are connected to each other.

Accordingly, the embodiment of the leakage sensor 200 may be facilitated at low cost with a simple configuration.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

### [DESCRIPTION OF REFERENCE NUMERALS]

| | | | |
|---|---|---|---|
| 1: | battery module | | |
| 10: | battery cell | 20: | housing |
| 30: | ICB | | |
| 100: | case | 110: | liquid injection port |
| 120: | vent | 130: | terminal |
| P1: | first portion | P2: | second portion |
| 200: | leakage sensor | | |
| 200A: | first leakage sensor | 200B: | second leakage sensor |

| | | | |
|---|---|---|---|
| 210: | circuit board | | |
| H1: | first hole | H2: | second hole |
| 220: | conductor | | |
| 222: | first conductor | 224: | second conductor |
| 226: | third conductor | 228: | terminal |
| LC1: | first link portion | LC2: | second link portion |
| WC1: | first wrapping portion | WC2: | second wrapping portion |
| WC4: | third wrapping portion | WC4: | fourth wrapping portion |
| WC5: | fifth wrapping portion | WC6: | sixth wrapping portion |
| WC7: | seventh wrapping portion | WC8: | eighth wrapping portion |
| CC1: | first connecting portion | CC6: | second connecting portion |
| CC3: | third connecting portion | CC4: | fourth connecting portion |
| 310: | first electrode lead | 320: | second electrode lead |
| 410: | first insulating film | 420: | second insulating film |

## Claims

1. A battery cell capable of detecting electrolyte leakage, comprising:
an electrode assembly;
an electrolyte;
a case 100 accommodating the electrode assembly and injected with the electrolyte, the case 100 comprising a first portion P1 and a second portion P2 spaced apart from each other by a predetermined distance; and
a leakage sensor 200 coupled to and installed at the case 100, the leakage sensor 200 detecting electrolyte leaking to the outside through the first portion P1 and the second portion P2,
wherein the leakage sensor 200 comprises a conductor 220 surrounding the first portion P1 and the second portion P2 and constituting an electric circuit,
wherein at least one of a resistance, a current or a voltage of the electric circuit may change when the leaked electrolyte contacts with the conductor 220, and
wherein the conductor 220 comprises a first conductor 222 surrounding the first portion P1, a second conductor 224 surrounding the second portion P2, and a third conductor 226 connecting the first conductor 222 and the second conductor 224, the first conductor 222, the second conductor 224, and the third conductor 226 constituting the electric circuit.

2. The battery cell of claim 1, wherein the first portion P1 is a liquid injection port 110 for injecting electrolyte sealed after injecting the electrolyte, or
the second portion P2 is a vent 120 opened by internal pressure.

3. The battery cell of any one claims 1 and 2, wherein the first portion P1 or the second portion P2 comprises an entire area of the case 100 where a predetermined hole is provided or where a predetermined hole is to be provided, and the first conductor 222 or the second conductor 224 surrounds the predetermined hole.

4. The battery cell of any one of claims 1 to 3, wherein the leakage sensor 200 further comprises a circuit board 210 coupled to the case 100 and having the conductor 220 provided therein, the circuit board 210 comprising a first hole H1 corresponding to the first portion P1 and a second hole H2 corresponding to the second portion P2,
the first conductor 222 surrounds the first hole H1, and
the second conductor 224 surrounds the second hole H2.

5. The battery cell of any one of claims 1 to 4, wherein the third conductor 226 is provided between the first conductor 222 and the second conductor 224.

6. The battery cell of any one of claims 1 to 5, wherein the first conductor 222 comprises a first wrapping portion WC1 surrounding the first portion P1 and a second wrapping portion WC2 surrounding the first wrapping portion WC1 with a predetermined distance therebetween,
the second conductor 224 comprises: a fifth wrapping portion WC5 surrounding the second portion P2; and a sixth wrapping portion WC6 surrounding the fifth wrapping portion WC5 with a predetermined distance therebetween or a sixth wrapping portion WC6 surrounded by the fifth wrapping portion WC5 with a predetermined distance therebetween to surround the second portion P2,
the third conductor 226 comprises: a first connecting portion CC1 connecting the first wrapping portion WC1 and the fifth wrapping portion WC5; and a second connecting portion CC2 connecting the second wrapping portion WC2 and the sixth wrapping portion WC6, the second connecting portion CC2 spaced apart from the first connecting portion CC1 by a predetermined distance,
the first wrapping portion WC1, the second wrapping portion WC2, the fifth wrapping portion WC5, the sixth wrapping portion WC6, the first connecting portion CC1 and the second connecting portion CC2 constitutes the electric circuit, and
at least one of the resistance, the current or the voltage changes when the leaking electrolyte is simultaneously in contact with the first wrapping portion WC1 and the second wrapping portion WC2, simultaneously in contact with the fifth wrapping portion WC5 and the sixth wrapping portion WC6, or simultaneously in contact with the first connecting portion CC1 and the second connecting portion CC2 such that the first wrapping portion WC1 and the second wrapping portion WC2 are electrically connected by the leaked electrolyte, the fifth wrapping portion WC5 and the sixth wrapping portion WC6 are electrically connected by the leaked electrolyte, or the first connecting portion CC1 and the second connecting portion CC2 are electrically connected by the leaked electrolyte .

7. The battery cell of claim 6, wherein the first conductor 222 comprises a third wrapping portion WC3 surrounding the second wrapping portion WC2 with a predetermined distance therebetween,
the second conductor 224 comprises a seventh wrapping portion WC7 surrounding the sixth wrapping portion WC6 with a predetermined distance therebetween or a seventh wrapping portion WC7 surrounded by the sixth wrapping portion WC6 with a predetermined distance therebetween to surround the second portion P2,
the third conductor 226 comprises a third connecting portion CC3 connecting the third wrapping portion WC3 and the seventh wrapping portion WC7, the third connecting portion CC3 spaced apart from the second connecting portion CC2 by a predetermined distance,
the third wrapping portion WC3, the seventh wrapping portion WC7 and the third connecting portion CC3 constitute the electric circuit, and
at least one of the resistance, the current or the voltage of the electric circuit changes when the leaked electrolyte is simultaneously in contact with the first wrapping portion WC1 and the second wrapping portion WC2, simultaneously in contact with the second wrapping portion WC2 and the third wrapping portion WC3, simultaneously in contact with the fifth wrapping portion WC5 and the sixth wrapping portion WC6, simultaneously in contact with the sixth wrapping portion WC6 and the seventh wrapping portion WC7, simultaneously in contact with the first connecting portion CC1 and the second connecting portion CC2, or simultaneously in contact with the second connecting portion CC2 and the third connecting portion CC3 such that the first wrapping portion WC1 and the second wrapping portion WC2 are electrically connected by the leaked electrolyte, the second wrapping portion WC2 and the third wrapping portion WC3 are electrically connected by the leaked electrolyte, the fifth wrapping portion WC5 and the sixth wrapping portion WC6 are electrically connected by the leaked electrolyte, the sixth wrapping portion WC6 and the seventh wrapping portion WC7 are electrically connected by the leaked electrolyte, the first connecting portion CC1 and the second connecting portion CC2 are electrically connected by the leaked electrolyte, or the second connecting portion CC2 and the third connecting portion CC3 are electrically connected by the leaked electrolyte,.

8. The battery cell of claim 7, wherein the first wrapping portion WC1, the fifth wrapping portion WC5, the first connecting portion CC1, the third wrapping portion WC3, the seventh wrapping portion WC7 and the third connecting portion CC3 are connected to one another.

9. The battery cell of any one of claims 7 and 8, wherein the first conductor 222 comprises a fourth wrapping portion WC4 surrounding the third wrapping portion WC3 with a predetermined distance therebetween,
the second conductor 224 comprises an eighth wrapping portion WC8 surrounding the seventh wrapping portion WC7 with a predetermined distance therebetween or an eighth wrapping portion WC8 surrounded by the seventh wrapping portion WC7 with a predetermined distance therebetween to surround the second portion P2,
the third conductor 226 comprises a fourth connecting portion CC4 connecting the fourth wrapping portion WC4 and the eighth wrapping portion WC8, the fourth connecting portion CC4 spaced apart from the third connecting portion CC3 by a predetermined distance,
the fourth wrapping portion WC4, the eighth wrapping portion WC8 and the fourth connecting portion CC4 constitute the electric circuit, and
at least one of the resistance, the current or the voltage of the electric circuit changes when the leaked electrolyte is simultaneously in contact with the first wrapping portion WC1 and the second wrapping portion WC2, simultaneously in contact with the second wrapping portion WC2 and the third wrapping portion WC3, simultaneously in contact with the third wrapping portion WC3 and the fourth wrapping portion WC4, simultaneously in contact with the fifth wrapping portion WC5 and the sixth wrapping portion WC6, simultaneously in contact with the sixth wrapping portion WC6 and the seventh wrapping portion WC7, simultaneously in contact with the seventh wrapping portion WC7 and the eighth wrapping portion WC8, simultaneously in contact with the first connecting portion CC1 and the second connecting portion CC2, simultaneously in contact with the second connecting portion CC2 and the third connecting portion CC3, or simultaneously in contact with the third connecting portion CC3 and the fourth connecting portion CC4 such that the first wrapping portion WC1 and the second wrapping portion WC2 are electrically connected by the leaked electrolyte, the second wrapping portion WC2 and the third wrapping portion WC3 are electrically connected by the leaked electrolyte, the third wrapping portion WC3 and the fourth wrapping portion WC4 are electrically connected by the leaked electrolyte, the fifth wrapping portion WC5 and the sixth wrapping portion WC6 are electrically connected by the leaked electrolyte, the sixth wrapping portion WC6 and the seventh wrapping portion WC7 are electrically connected by the leaked electrolyte, the seventh wrapping portion WC7 and the eighth wrapping portion WC8 are electrically connected by the leaked electrolyte, the first connecting portionCC1 and the second connecting portionCC2 are electrically connected by the leaked electrolyte, the second connecting portionCC2 and the third connecting portionCC3 are electrically connected by the leaked electrolyte, or the third connecting portionCC3 and the fourth connecting portionCC4 are electrically connected by the leaked electrolyte.

10. The battery cell of claim 9, wherein the first wrapping portion WC1, the fifth wrapping portion WC5, the first connecting portion CC1, the third wrapping portion WC3, the seventh wrapping portion WC7 and the third connecting portion CC3 are connected to one another, and
the second wrapping portion WC2, the sixth wrapping portion WC6, the second connecting portion CC2, the fourth wrapping portion WC4, the eighth wrapping portion WC8 and the fourth connecting portion CC4 are connected to one another.

11. A battery cell capable of detecting electrolyte leakage, comprising:
an electrode assembly;
an electrolyte;
a case 100 accommodating the electrode assembly and injected with the electrolyte, the case 100 comprising a first portion P1; and
a leakage sensor 200 coupled to and installed at the case 100, the leakage sensor 200 detecting electrolyte leaking to the outside through the first portion P1,
wherein the leakage sensor 200 comprises a conductor 220 surrounding the first portion P1 and constituting an electric circuit,
at least one of a resistance, a current or a voltage of the electric circuit changes when the leaked electrolyte contacts with the conductor 220,
the conductor 220 comprises: a first wrapping portion WC1 surrounding the first portion P1; a second wrapping portion WC2 surrounding the first wrapping portion WC1 with a predetermined distance therebetween; and a third wrapping portion WC3 surrounding the second wrapping portion WC2 with a predetermined distance therebetween,
the first wrapping portion WC1, the second wrapping portion WC2 and the third wrapping portion WC3 constitute the electric circuit, and
at least one of the resistance, the current or the voltage of the electric circuit changes when the leaked electrolyte is simultaneously in contact with the first wrapping portion WC1 and the second wrapping portion WC2, or simultaneously in contact with the second wrapping portion WC2 and the third wrapping portion WC3 such that the first wrapping portion WC1 and the second wrapping portion WC2 are electrically connected by the leaked electrolyte, or the second wrapping portion WC2 and the third wrapping portion WC3 are electrically connected by the leaked electrolyte.

12. The battery cell of claim 11, wherein the first portion P1 comprises an entire area of the case 100 where a predetermined hole is provided or where a predetermined hole is to be provided, and the conductor 220 surrounds the predetermined hole.

13. The battery cell of any one of claims 11 and 12, wherein the first wrapping portion WC1 and the third wrapping portion WC3 are connected to each other.

14. The battery cell of claim 13, wherein the conductor 220 further comprises a fourth wrapping portion WC4 surrounding the third wrapping portion WC3 with a predetermined distance therebetween and constituting the electric circuit, and
at least one of the resistance, the current or the voltage of the electric circuit changes when the leaking electrolyte is simultaneously in contact with the first wrapping portion WC1 and the second wrapping portion WC2, simultaneously in contact with the second wrapping portion WC2 and the third wrapping portion WC3, or simultaneously in contact with the third wrapping portion WC3 and the fourth wrapping portion WC4 such that the first wrapping portion WC1 and the second wrapping portion WC2 are electrically connected by the leaking electrolyte, the second wrapping portion WC2 and the third wrapping portion WC3 are electrically connected by the leaking electrolyte, or the third wrapping portion WC3 and the fourth wrapping portion WC4 are electrically connected by the leaking electrolyte.

15. The battery cell of claim 14, wherein the first wrapping portion WC1 and the third wrapping portion WC3 are connected to each other, and
the second wrapping portion WC2 and the fourth wrapping portion WC4 are connected to each other.

16. A battery module comprising a plurality of battery cells of any one of claims 1 to 15.

17. The battery module of claim 16, further comprising:
a housing 20 accommodating the plurality of battery cells; and
an ICB (Inter Connected Board) 30 coupled to the housing 20 or the plurality of battery cells,
wherein the ICB 30 is connected to a conductor 220 of a leakage sensor 200 of each of the plurality of battery cells to apply a current to an electric circuit and measure or detect at least one of a resistance, a current or a voltage of the electric circuit.
